# EUROPEAN PATENT APPLICATION

(11) **EP 3 442 264 A1**
(43) Date of publication of application: **13.02.2019**
(21) Application number: 18188513.8
(22) Date of filing: 10.08.2018
(51) Int. Cl.: H04W 36/00

(54) **DEVICE AND METHOD OF HANDLING A BEARER CHANGE IN DUAL CONNECTIVITY**

(30) Priority: 11.08.2017 US 201762544000 P; 30.09.2017 US 201762566333 P
(71) Applicant: HTC Corporation, Taoyuan City 330, (TW)
(72) Inventor: WU, Chih-Hsiang, Taoyuan City 330 (TW)
(74) Representative: Carstens, Dirk Wilhelm

(57) **Abstract**

A network is configured to execute instructions of the first BS performing a first dual connectivity (DC) operation procedure with the second BS; the first BS transmitting a first radio resource control (RRC) message on a signaling radio bearer (SRB) to a communication device in response to the first DC operation procedure; the first BS receiving a first RRC response message from the communication device on the SRB, in response to the first RRC message; the second BS receiving a first plurality of packet data convergence protocol (PDCP) Service Data Units (SDUs) associated to a data radio bearer (DRB) from the communication device; and the second BS processing the first plurality of PDCP SDUs according to a first RX_NEXT, a first RX_DELIV and a first RX_REORD which are associated to the DRB.

## Description

### Background of the Invention

### 1. Field of the Invention

The present invention relates to a device and a method used in a wireless communication system, and more particularly, to a device and a method of handling a bearer change in dual connectivity.

### 2. Description of the Prior Art

In a new radio (NR) system, a user equipment (UE) may communicate with a new radio base station (gNB) in dual connectivity (DC) with an evolved Node-B (eNB) or another gNB. A bearer may be configured to the UE in the DC. It is still unknown how to process (e.g., receive) data, if a type of the bearer is changed. Accordingly, the UE cannot operate properly. Thus, it is important to define an operation for the UE in the situation to solve the problem.

### Summary of the Invention

The present invention therefore provides a method and related communication device for handling a bearer change in dual connectivity to solve the abovementioned problem.

A network comprising a first base station (BS) and a second BS comprises at least one storage device; and at least one processing circuit coupled to the at least one storage device. The at least one storage device stores, and the at least one processing circuit is configured to execute instructions of: the first BS performing a first dual connectivity (DC) operation procedure with the second BS; the first BS transmitting a first radio resource control (RRC) message on a signaling radio bearer (SRB) to a communication device in response to the first DC operation procedure, wherein the first RRC message configures a data radio bearer (DRB) according to at least one resource of the second BS; the first BS receiving a first RRC response message from the communication device on the SRB, in response to the first RRC message; the second BS receiving a first plurality of packet data convergence protocol (PDCP) Service Data Units (SDUs) associated to the DRB from the communication device; the second BS processing the first plurality of PDCP SDUs according to a first RX_NEXT, a first RX_DELIV and a first RX_REORD which are associated to the DRB; the first BS transmitting a second RRC message on the SRB to the communication device to modify the DRB to be a master cell group (MCG) bearer or a MCG split bearer; the first BS receiving a second RRC response message responding to the second RRC message on the SRB from the communication device; the second BS transmitting at least one of the first RX_NEXT, the first RX_DELIV and the first RX_REORD to the first BS; the first BS receiving a second plurality of PDCP SDUs associated to the DRB from the communication device; and the first BS processing the second plurality of PDCP SDUs according to the at least one of the first RX_NEXT, the first RX_DELIV and the first RX_REORD.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of a process according to an example of the present invention.

### Detailed Description

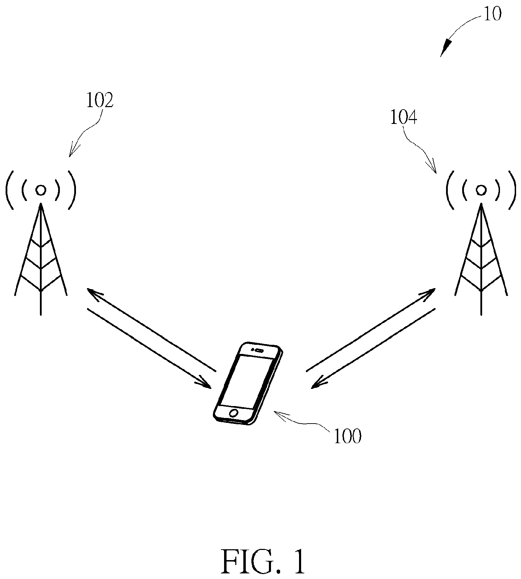

Fig. 1 is a schematic diagram of a wireless communication system 10 according to an example of the present invention. The wireless communication system 10 is briefly composed of a communication device 100, a base station (BS) 102 and a BS 104. In Fig. 1, the communication device 100, the BS 102 and the BS 104 are simply utilized for illustrating the structure of the wireless communication system 10.

The communication device 100 may be configured to communicate with the BS 102 only, i.e., not in dual connectivity (DC). The BS 102 may command the communication device 100 to hand over to the BS 104.

The communication device 100 may be configured to communicate with the BSs 102 and 104 simultaneously according to the DC configured to the communication device 100. For example, the communication device 100 may receive packets from the BS 102 at one carrier frequency and the BS 104 at another carrier frequency, or the communication device 100 may transmit packets (e.g., protocol data units (PDUs)) to the BS 102 at one carrier frequency and/or the BS 104 at another carrier frequency. In general, it means that the communication device 100 receives the packets from at least one cell of the BS 102 and/or at least one cell of the BS 104. Similarly, it also means that the communication device 100 transmits the packets to at least one cell of the BS 102 and/or at least one cell of the BS 104. In addition, one of the BSs 102 and 104 may be a master node (MN) and the other BS may be a secondary node (SN) . One of the cell(s) of the MN communicating with the communication device 100 may be a primary cell (PCell) and the other cell (s) (if available) of the MN may be secondary cell(s) (SCell(s)). One of the cell(s) of the SN communicating with the communication device 100 may be a primary SCell (PSCell), and the other cell(s) (if available) of the SN may be SCell(s).

The communication device 100 may be a user equipment (UE), a mobile phone, a laptop, a tablet computer, an electronic book, a portable computer system, a vehicle or an airplane. In addition, for an uplink (UL), the communication device 100 is a transmitter and the BS (s) 102 and/or 104 are/is a receiver (s), and for a downlink (DL), the BS(s) 102 and/or 104 are/is a transmitter(s) and the communication device 100 is a receiver.

In one example, a BS (e.g., the BS 102 or the BS 104) may use the following state variables to communicate PDCP Service Data Units (SDUs) associated to a DRB or a SRB with a communication device (e.g., the communication device 100).
- TX_NEXT, which indicates a COUNT value of a next PDCP SDU to be transmitted. For example, the initial value of TX_NEXT is 0.
- RX_NEXT, which indicates a COUNT value of a next PDCP SDU expected to be received. For example, the initial value of RX_NEXT is 0.
- RX_DELIV, which indicates a COUNT value of a first PDCP SDU not delivered to upper layers, but still waited for. For example, the initial value of RX_DELIV is 0.
- RX_REORD, which indicates a COUNT value following a COUNT value associated with a PDCP Data PDU which triggered/triggers t-Reordering to be started or restarted.

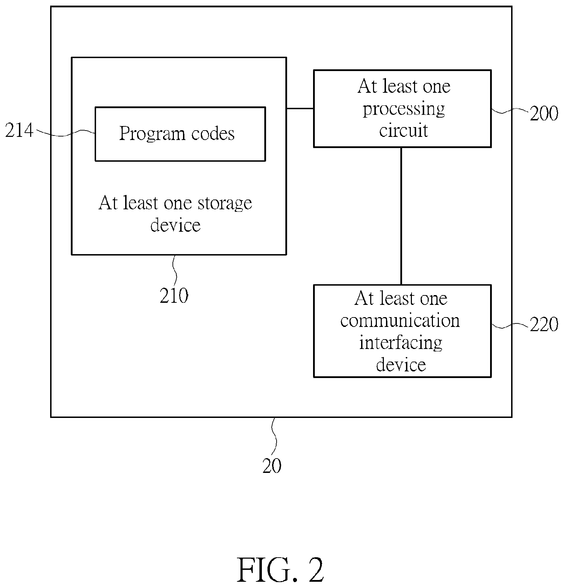

Fig. 2 is a schematic diagram of a communication device 20 according to an example of the present invention. The communication device 20 may be the communication device 100, the BS (s) 102 and/or 104 shown in Fig. 1, but is not limited herein. The communication device 20 may include at least one processing circuit 200 such as a microprocessor or Application Specific Integrated Circuit (ASIC), at least one storage device 210 and at least one communication interfacing device 220. The at least one storage device 210 may be any data storage device that may store program codes 214, accessed and executed by the at least one processing circuit 200. Examples of the at least one storage device 210 include but are not limited to a subscriber identity module (SIM), read-only memory (ROM), flash memory, random-access memory (RAM), hard disk, optical data storage device, non-volatile storage device, non-transitory computer-readable medium (e.g., tangible media), etc. The at least one communication interfacing device 220 is preferably at least one transceiver and is used to transmit and receive signals (e.g., data, messages and/or packets) according to processing results of the at least one processing circuit 200.

In the following examples, a UE is used for representing the communication device 100 in Fig. 1, to simplify the illustration of the examples.

In one example, the UE connecting to the MN has a first signalling radio bearer (SRB), and the MN transmits a measurement configuration on the first SRB to the UE. In detail, the UE transmits a measurement report on the first SRB to the MN in response to the measurement configuration. The MN initiates a SN Addition procedure (e.g., SgNB Addition procedure) with the SN for the UE according to the measurement report. The MN configures the UE to connect to the SN in response to the SN Addition procedure by transmitting a radio resource control (RRC) message on the first SRB to the UE. The RRC message includes a SN configuration (e.g., SCG configuration) for the UE to connect to the SN. According to the RRC message, the UE may setup or reconfigure a RB.

A protocol architecture may be used for illustrating that a use of a radio bearer (RB) depends on how the RB is setup. A RB may be a data RB (DRB) for data transmission and/or data reception on a user plane, and a SRB for data transmission and/or data reception on a control plane. A DRB configuration may include at least one of a DRB identity, a packet data convergence protocol (PDCP) configuration, a radio link control (RLC) configuration, a logical channel identity and a logical channel configuration (e.g., priority and/or logical channel group). A SRB configuration may include a SRB identity, the RLC configuration and the logical channel configuration. In the DC, there may be three types of RB: a master cell group (MCG) bearer, a secondary cell group (SCG) bearer and a split bearer. The MCG bearer may utilize radio protocol(s) located at the MN, to use radio resources (e.g., time resources and/or frequency resources) of the MN. The SCG bearer may utilize radio protocol (s) located at the SN, to use radio resources (e.g., time resources and/or frequency resources) of the SN. The split bearer may utilize the radio protocol(s) located at both the MN and the SN, to use the radio resources of the MN and the SN. The split bearer may be a MCG split bearer or a SCG split bearer. A DRB may be the MCG bearer, the SCG bearer or the split bearer. A SRB may be configured as the MCG bearer or the split bearer.

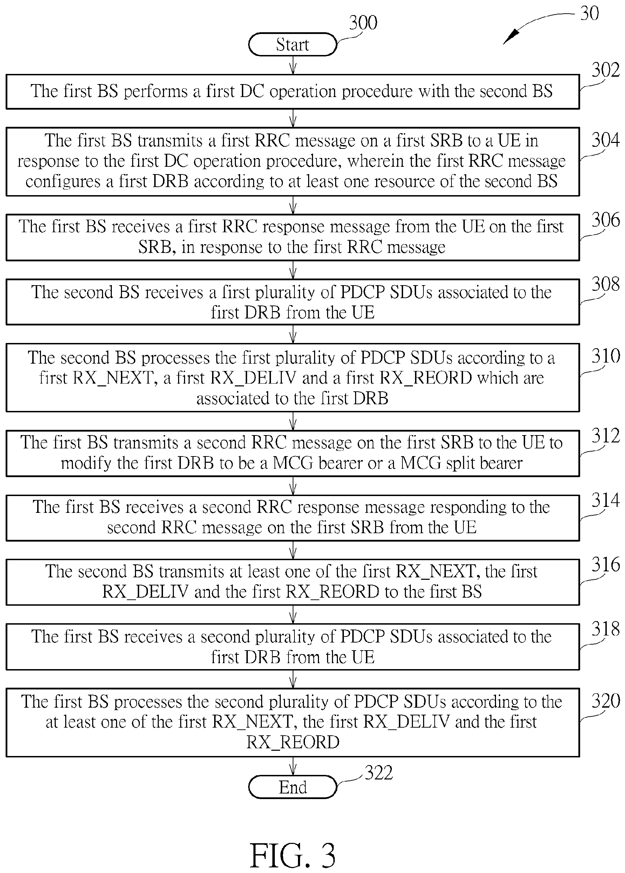

A process 30 in Fig. 3 may be utilized in a network comprising a first BS (e.g., the BS 102) and a second BS (e.g., the BS 104), and includes the following steps:
- Step 300:: Start.
- Step 302:: The first BS performs a first DC operation procedure with the second BS.
- Step 304:: The first BS transmits a first RRC message on a first SRB to a UE in response to the first DC operation procedure, wherein the first RRC message configures a first DRB according to (e.g., using) at least one resource of the second BS.
- Step 306:: The first BS receives a first RRC response message from the UE on the first SRB, in response to the first RRC message.
- Step 308:: The second BS receives a first plurality of PDCP Service Data Units (SDUs) associated to the first DRB from the UE.
- Step 310:: The second BS processes the first plurality of PDCP SDUs according to (e.g., by using) a first RX_NEXT, a first RX_DELIV and a first RX_REORD which are associated to the first DRB.
- Step 312:: The first BS transmits a second RRC message on the first SRB to the UE to modify the first DRB to be a MCG bearer or a MCG split bearer.
- Step 314:: The first BS receives a second RRC response message responding to the second RRC message on the first SRB from the UE.
- Step 316:: The second BS transmits at least one of the first RX_NEXT, the first RX_DELIV and the first RX_REORD to the first BS.
- Step 318:: The first BS receives a second plurality of PDCP SDUs associated to the first DRB from the UE.
- Step 320:: The first BS processes the second plurality of PDCP SDUs according to (e.g., by using) the at least one of the first RX_NEXT, the first RX_DELIV and the first RX_REORD.
- Step 322:: End.

In one example, the first BS performs a second DC operation procedure for the UE with the second BS to modify the first DRB to be the MCG bearer or the MCG split bearer. The first BS may transmit the second RRC message in response to the second DC operation. In one example, the first BS performs the second DC operation procedure in response to the second RRC message.

In one example, the first DRB using the at least one resource of the second BS is a SCG bearer or a SCG split bearer.

In one example, the second BS transmits the at least one of the first RX_NEXT (value), the first RX_DELIV (value) and the first RX_REORD (value) to the first BS in response to the second DC operation procedure, in response to a SN (e.g., SgNB) Reconfiguration Complete message received from the first BS or when/after detecting a transmission from the UE. The transmission may include a random access (RA) preamble, a physical UL control channel (PUCCH) transmission or a physical UL shared channel (PUSCH) transmission.

In one example, the second BS updates the first RX_NEXT, the first RX_DELIV and the first RX_REORD to other values (i.e., not the initial values), when processing the first plurality of PDCP Data PDUs.

In one example, the second BS transmits all of the at least one of the first RX_NEXT (value), the first RX_DELIV (value) and the first RX_REORD (value) to the first BS.

In one example, the second BS does not transmit one of the at least one of the first RX_NEXT (value), the first RX_DELIV (value) and the first RX_REORD (value) to the first BS. For example, the second BS may not transmit the first RX_REORD to the first BS. In this case, the first BS may set a second RX_REORD to the first RX_NEXT, and may use the second RX_REORD to process the second plurality of PDCP SDUs. For example, the second BS may not transmit the first RX_NEXT to the first BS. The first BS may set a second RX_NEXT to the first RX_REORD or the first RX_DELIV, and may use the second RX_NEXT to process the second plurality of PDCP SDUs.

In one example, the second BS transmits status information of other PDCP SDU(s) associated with COUNT value(s) or PDCP sequence number(s) (may also be denoted as SN(s)) after the first RX_DELIV to the first BS, in addition to the COUNT value. In one example, the status information includes (or indicates) COUNT value(s) of the other PDCP SDU (s) which are missing. In one example, the status information is a bitmap which indicates which PDCP SDU (s) is missing and which PDCP SDU(s) is correctly received in the receiving PDCP entity. A bit position of a Nth bit in the bitmap is N, i.e., the bit position of the first bit in the bitmap is 1.

In one example, the second BS does not transmit the first RX_NEXT to the first BS. The first BS may set a second RX_NEXT to a COUNT value derived from the first RX_DELIV and the status information, and may use the second RX_NEXT to process the second plurality of PDCP SDUs. The COUNT value may be derived from a COUNT value of the last PDCP SDU of the other PDCP SDU(s) indicated in the status information. For example, the COUNT value of the last PDCP SDU may be derived from the first RX_DELIV and the position of the last bit with a value of 1 in the bitmap.

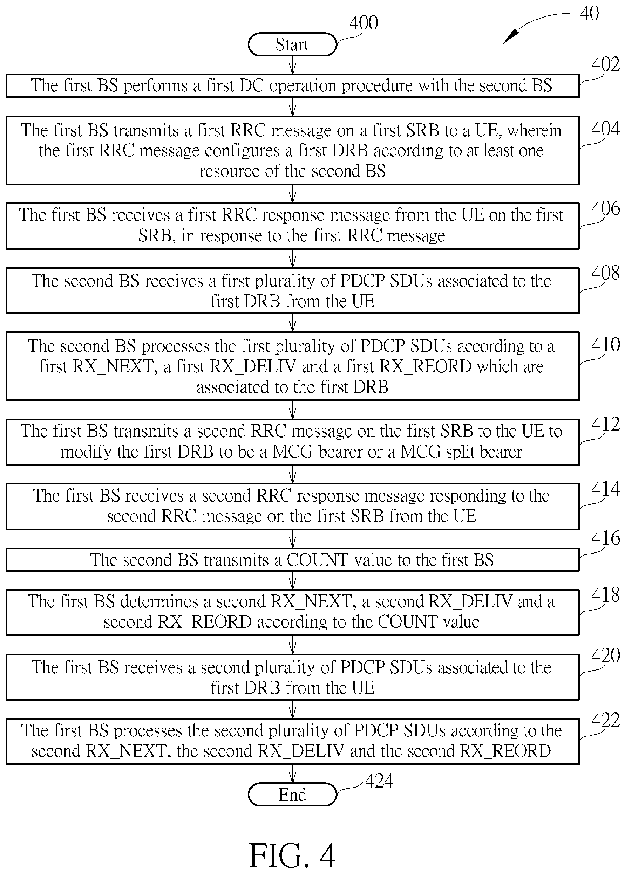

A process 40 in Fig. 4 may be utilized in a first BS (e.g., the BS 102) to communicate with a second BS (e.g., the BS 104), and includes the following steps:
- Step 400:: Start.
- Steps 402-414:: The same as Steps 302-314.
- Step 416:: The second BS transmits a COUNT value (e.g., of a PDCP SDU) to the first BS.
- Step 418:: The first BS determines a second RX_NEXT, a second RX_DELIV and a second RX_REORD according to the COUNT value.
- Step 420:: The first BS receives a second plurality of PDCP SDUs associated to the first DRB from the UE.
- Step 422:: The first BS processes the second plurality of PDCP SDUs according to (e.g., by using) the second RX_NEXT, the second RX_DELIV and the second RX_REORD.
- Step 424:: End.

In one example, the first BS performs a second DC operation procedure for the UE with the second BS to modify the first DRB to be the MCG bearer or the MCG split bearer. The first BS may transmit the second RRC message in response to the second DC operation. In one example, the first BS performs the second DC operation procedure in response to the second RRC message.

In one example, the second BS updates the first RX_NEXT, the first RX_DELIV and the first RX_REORD to other values (i.e., not initial values), when processing the first plurality of PDCP SDUs.

In one example, the second BS transmits the COUNT value to the first BS in response to the second DC operation procedure, in response to a SN (e.g., SgNB) Reconfiguration Complete message received from the first BS or when/after detecting a transmission from the UE. The transmission may include a RA preamble, a PUCCH transmission or a PUSCH transmission.

In one example, the PDCP SDU in Step 416 is a missing PDCP SDU, i.e., the second BS does not receive the PDCP SDU. The second BS may detect/determine the missing PDCP SDU from the first plurality of PDCP SDUs. For example, the first plurality of PDCP SDUs have a first SDU and a second PDCP SDU. A sequence number of the first PDCP SDU is M, and a sequence number of the second PDCP SDU is N (>M) . Then, the second BS detects/determines the missing PDCP SDU which is a PDCP SDU with a sequence number = M+1, ... or N-1, since the UE does not receive the PDCP SDU (s) which has the sequence number = M+1, ..., N-1. The PDCP SDU may be the first missing PDCP SDU.

In one example, the first BS sets the second RX_NEXT to the COUNT value, the second RX_DELIV to the COUNT value and the second RX_REORD to the COUNT value.

In one example, the second BS transmits status information of other PDCP SDU(s) to the first BS in addition to the COUNT value. In one example, the status information includes COUNT values of the other PDCP SDU(s) which are missing. In one example, the status information is a bitmap which indicates which PDCP SDU (s) is missing and which PDCP SDU(s) is correctly received in a PDCP entity associated to the first DRB. A bit position of a Nth bit in the bitmap is N, i.e., the bit position of the first bit in the bitmap is 1.

In one example, the first BS sets the second RX_NEXT, the second RX_DELIV and the second RX_REORD according to/derived from the COUNT value of the first missing PDCP SDU and the status information. For example, the first BS may set the RX_DELIV to the COUNT value. For example, the first BS may set the second RX_NEXT to a COUNT value of the last missing PDCP SDU derived from the COUNT value of the first missing PDCP SDU and the status information. For example, the first BS may set the second RX_NEXT to (a first COUNT value + 1), wherein the first COUNT value is a COUNT value of the last PDCP SDU received by the second BS as indicated in the status information. For example, the first COUNT value may be derived from the COUNT value of the first missing PDCP SDU + the position of the last bit with a value of 1 in the bitmap. The first BS may set the second RX_REORD in the same way as setting the second RX_NEXT or the second RX_DELIV as described above. That is, the second RX_REORD and the second RX_NEXT are set to the same value, or the second RX_REORD and the second RX_DELIV are set to the same value.

The following examples may be applied to the processes 30 and 40.

In one example, the first BS performs the second DC operation procedure for the UE with the second BS to modify the first DRB to be the MCG bearer or the MCG split bearer from a SCG bearer or a SCG split bearer.

In one example, the first RRC message configures the first DRB to be the SCG bearer. The second RRC message may configure the first DRB to be the MCG bearer or a split bearer from the SCG bearer. The second RRC message may implicitly or explicitly indicate a bearer type change from the SCG bearer to the MCG bearer or the split bearer.

In one example, the first RRC message configures the first DRB to be a split bearer. The first BS configures the split bearer as the SCG split bearer. The second RRC message may not indicate a bearer type change for the split bearer. In this case, the first BS may configure the split bearer to be the SCG split bearer at the beginning, and then may configure the split bearer to be a MCG split bearer with the second BS in response to the second DC operation procedure. The UE may not know that the split bearer is the MCG split bearer or the SCG split bearer.

In one example, the UE in the DC with the first BS and the second BS transmits the second plurality of PDCP SDUs associated to the first DRB to the first BS, in response to the second RRC message or when the first DRB is modified to be the MCG bearer or the split bearer.

In one example, the UE disconnects from the second BS and transmits the second plurality of PDCP SDUs associated to the first DRB to the first BS, in response to the second RRC message, or when the first DRB is modified to be the MCG bearer.

In one example, the first BS starts a t-Reordering timer associated to the first DRB in response to the second DC operation procedure, in response to a second RRC response message received from the UE, or when detecting a transmission from the UE. The transmission may be a PDCP Data PDU (e.g., the first PDCP Data PDU associated to the first DRB when the first DRB is changed to be the MCG bearer or the split bearer), a RA preamble, a medium access control (MAC) control element (CE), a PUCCH transmission or a PUSCH transmission.

In one example, the second BS processes a third plurality of PDCP SDUs associated to the first DRB by using a first TX_NEXT to transmit the third plurality of PDCP SDUs to the UE. The second BS updates the first TX_NEXT, when processing the third plurality of PDCP SDUs to be transmitted. Then, the second BS may transmit the first TX_NEXT to the first BS in response to the second DC operation procedure. The first BS may transmit a fourth plurality of PDCP SDUs associated to the first DRB to the UE according to (e.g., by using) the first TX_NEXT.

In one example, the first BS may transmit a third RRC message on the first SRB to the UE, wherein the third RRC message configures a second DRB which is a SCG bearer. The first BS receives a third RRC response message from the UE on the first SRB, in response to the third RRC message. The second BS receives a fifth plurality of PDCP SDUs associated to the second DRB from the UE. The second BS processes the fifth plurality of PDCP SDUs according to (e.g., by using) a third RX_NEXT, a third RX_DELIV and a third RX_REORD which are associated to the second DRB. The first BS performs a third DC operation procedure for the UE with the second BS to modify the second DRB to a MCG bearer or a MCG split bearer from the SCG bearer. The first BS transmits a fourth RRC message on the first SRB to the UE in response to the third DC operation procedure, wherein the fourth RRC message configures the second DRB to be the MCG bearer or a split bearer from the SCG bearer. The first BS receives a fourth RRC response message responding to the fourth RRC message on the first SRB from the UE. The second BS does not transmit the third RX_NEXT, the third RX_DELIV and the third RX_REORD to the first BS in response to the third DC operation procedure. The first BS receives a sixth plurality of PDCP SDUs associated to the second DRB from the UE. The first BS processes the sixth plurality of PDCP SDUs according to (e.g., by using) a fourth RX_NEXT, a fourth RX_DELIV and a fourth RX_REORD. The first BS sets (e.g., creates) the fourth RX_NEXT, the fourth RX_DELIV and the fourth RX_REORD to (with) initial values in response to the third DC operation procedure. If the second DC operation and the third DC operation are the same DC procedure, the second RRC message and the fourth RRC message are the same message. Otherwise, the second RRC message and the fourth RRC message are different messages.

In one example, the first BS maintains a fifth RX_NEXT, a fifth RX_DELIV and a fifth RX_REORD associated to the first SRB for receiving the RRC messages on the first SRB. The first BS does not transmit the fifth RX_NEXT, the fifth RX_DELIV and the fifth RX_REORD to the second BS in response to the second DC operation procedure.

In one example, the first BS is a master evolved Node-B (eNB) or a master new radio BS (gNB). The second BS may be a secondary gNB or a secondary eNB. The first SRB may be a SRB1.

In one example, a PDCP SDU includes a frame, a packet or a PDU of a layer above the PDCP. The layer may be defined by the 3rd Generation Partnership Project (3GPP), the Institute of Electrical and Electronics Engineers (IEEE) or the Internet Engineering Task Force (IETF) . In one example, a PDCP SDU includes an Internet Control Message Protocol (ICMP) packet, a Dynamic Host Configuration Protocol (DHCP) packet, an Internet Protocol (IP) packet, an Ethernet frame or a Service Data Adaptation Protocol (SDAP) PDU.

In one example, the first DRB is an acknowledged mode (AM) DRB (e.g., configured to use RLC AM), and the second DRB is an unacknowledged mode (UM) DRB (e.g., configured to use RLC UM) . The first SRB may use the RLC AM.

In one example, a RRC message is a RRC Connection Reconfiguration message, and a RRC response message is a RRC Connection Reconfiguration Complete message.

It should be noted that although the above examples are illustrated to clarify the related operations of corresponding processes. The examples can be combined and/or modified arbitrarily according to system requirements and/or design considerations.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20.

To sum up, the present invention provides a method and related communication device for handling a bearer change in DC.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A network comprising a first base station (BS) and a second BS, comprising:
at least one storage device; and
at least one processing circuit, coupled to the at least one storage device, wherein the at least one storage device stores, and the at least one processing circuit is configured to execute instructions of:
the first BS performing a first dual connectivity (DC) operation procedure with the second BS;
the first BS transmitting a first radio resource control (RRC) message on a signaling radio bearer (SRB) to a communication device in response to the first DC operation procedure, wherein the first RRC message configures a data radio bearer (DRB) according to at least one resource of the second BS;
the first BS receiving a first RRC response message from the communication device on the SRB, in response to the first RRC message;
the second BS receiving a first plurality of packet data convergence protocol (PDCP) Service Data Units (SDUs) associated to the DRB from the communication device;
the second BS processing the first plurality of PDCP SDUs according to a first RX_NEXT, a first RX_DELIV and a first RX_REORD which are associated to the DRB;
the first BS transmitting a second RRC message on the SRB to the communication device to modify the DRB to be a master cell group (MCG) bearer or a MCG split bearer;
the first BS receiving a second RRC response message responding to the second RRC message on the SRB from the communication device;
the second BS transmitting at least one of the first RX_NEXT, the first RX_DELIV and the first RX_REORD to the first BS;
the first BS receiving a second plurality of PDCP SDUs associated to the DRB from the communication device; and
the first BS processing the second plurality of PDCP SDUs according to the at least one of the first RXNEXT, the first RX_DELIV and the first RX_REORD.

2. The network of claim 1, wherein the first BS performs a second DC operation procedure for the communication device with the second BS to modify the DRB to be the MCG bearer or the MCG split bearer.

3. The network of claim 2, wherein the second BS transmits the at least one of the first RX_NEXT, the first RX_DELIV and the first RX_REORD to the first BS in response to the second DC operation procedure, in response to a secondary node (SN) Reconfiguration Complete message received from the first BS, or when/after detecting a transmission from the communication device.

4. The network of claim 2, wherein the instructions further comprise:
the first BS starting a t-Reordering timer associated to the DRB in response to the second DC operation procedure, in response to a second RRC response message received from the communication device, or when detecting a transmission from the communication device.

5. The network of claim 1, wherein the instructions further comprise:
the second BS transmitting status information of at least one other PDCP SDU with at least one COUNT value or at least one PDCP sequence number equal to or after the first RX_DELIV, to the first BS.

6. The network of claim 5, wherein the instructions further comprise:
the first BS setting a second RX_NEXT to a COUNT value derived from the first RX_DELIV and the status information; and the first BS using the second RX_NEXT to process the second plurality of PDCP SDUs.

7. A network comprising a first base station (BS) and a second BS, comprising:
at least one storage device; and
at least one processing circuit, coupled to the at least one storage device, wherein the at least one storage device stores, and the at least one processing circuit is configured to execute instructions of:
the first BS performing a first dual connectivity (DC) operation procedure with the second BS;
the first BS transmitting a first radio resource control (RRC) message on a signaling radio bearer (SRB) to a communication device, wherein the first RRC message configures a data radio bearer (DRB) according to at least one resource of the second BS;
the first BS receiving a first RRC response message from the communication device on the SRB, in response to the first RRC message;
the second BS receiving a first plurality of packet data convergence protocol (PDCP) Service Data Units (SDUs) associated to the DRB from the communication device;
the second BS processing the first plurality of PDCP SDUs according to a first RX_NEXT, a first RX_DELIV and a first RX_REORD which are associated to the DRB;
the first BS transmitting a second RRC message on the SRB to the communication device to modify the DRB to be a master cell group (MCG) bearer or a MCG split bearer;
the first BS receiving a second RRC response message responding to the second RRC message on the SRB from the communication device;
the second BS transmitting a COUNT value to the first BS;
the first BS determining a second RX_NEXT, a second RX_DELIV and a second RX_REORD according to the COUNT value;
the first BS receiving a second plurality of PDCP SDUs associated to the DRB from the communication device; and
the first BS processing the second plurality of PDCP SDUs according to the second RX_NEXT, the second RX_DELIV and the second RX_REORD.

8. The network of claim 7, wherein the first BS performs a second DC operation procedure for the communication device with the second BS to modify the DRB to be the MCG bearer or the MCG split bearer.

9. The network of claim 8, wherein the second BS transmits the COUNT value to the first BS in response to the second DC operation procedure, in response to a secondary node (SN) Reconfiguration Complete message received from the first BS, or when/after detecting a transmission from the communication device.

10. The network of claim 7, wherein the instructions further comprise:
the second BS updating the first RX_NEXT, the first RX_DELIV and the first RX_REORD to a plurality of other values, when processing the first plurality of PDCP SDUs.

11. The network of claim 7, wherein the first BS sets the second RX_NEXT to the COUNT value, the second RX_DELIV to the COUNT value and the second RX_REORD to the COUNT value.

12. The network of claim 7, wherein the instructions further comprise:
the second BS transmitting status information of at least one other PDCP SDU to the first BS; and
the first BS setting the second RX_NEXT, the second RX_DELIV and the second RX_REORD according to the COUNT value and the status information.
